(19) **Europäisches Patentamt / European Patent Office / Office européen des brevets**

(11) **EP 1 658 337 B1**

(12) **EUROPÄISCHE PATENTSCHRIFT**

(45) Veröffentlichungstag und Bekanntmachung des Hinweises auf die Patenterteilung:
**25.04.2007 Patentblatt 2007/17**

(21) Anmeldenummer: **04763908.3**

(22) Anmeldetag: **07.08.2004**

(51) Int Cl.:
*C09B 67/00* (2006.01)    *C08K 9/04* (2006.01)

(86) Internationale Anmeldenummer:
**PCT/EP2004/008881**

(87) Internationale Veröffentlichungsnummer:
**WO 2005/021660 (10.03.2005 Gazette 2005/10)**

(54) **VERFAHREN ZUM VERZUGSFREIEN PIGMENTIEREN VON TEILKRISTALLINEN KUNSTSTOFFEN MIT PHTHALOCYANINPIGMENTEN**

METHOD FOR PIGMENTING SEMI-CRYSTALLINE PLASTICS WITH PHTHALOCYANINE PIGMENTS IN A NON-WARPING MANNER

PROCEDE POUR PIGMENTER SANS DEFORMATION DES PLASTIQUES SEMI-CRISTALLINS AU MOYEN DE PIGMENTS DE PHTALOCYANINE

(84) Benannte Vertragsstaaten:
**CH DE ES FR GB IT LI**

(30) Priorität: **21.08.2003 DE 10338730**

(43) Veröffentlichungstag der Anmeldung:
**24.05.2006 Patentblatt 2006/21**

(73) Patentinhaber: **Clariant Produkte (Deutschland) GmbH**
**65929 Frankfurt am Main (DE)**

(72) Erfinder:
• **GANSCHOW, Matthias**
**65195 Wiesbaden (DE)**

• **PLUEG, Carsten**
**64342 Seeheim-Jugenheim/Ober-Beerbach (DE)**
• **METZ, Hans, Joachim**
**64285 Darmstadt (DE)**

(74) Vertreter: **Hütter, Klaus et al**
**Clariant Produkte (Deutschland) Gmbh**
**Group Intellectual Property**
**Am Unisys-Park 1**
**65843 Sulzbach (DE)**

(56) Entgegenhaltungen:
**WO-A-03/066742**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft Phthalocyaninpigmente zum Einfärben von hochmolekularem organischem Material, insbesondere zum verzugsfreien Pigmentieren von teilkristallinen Kunststoffen, insbesondere Polyolefinen.

Bei der Einfärbung von teilkristallinen Kunststoffen mit organischen Pigmenten treten häufig Störungen im Material auf, die als Verzugserscheinungen bezeichnet werden. Die Pigmentierung großvolumiger Spritzgussteile, insbesondere solcher aus Polyethylen, führt zu Verformungen, Schrumpfungen und Rissbildungen (innere Spannungen), die je nach Anwendungsgebiet die eingefärbten Artikel unbrauchbar machen. Beispielsweise ist bei Flaschenkästen aufgrund von Deformation mit dem Verlust der Stapelbarkeit zu rechnen.

Diese Nachteile beziehen sich auf die Mehrzahl organischer Pigmente, während sich die anorganischen Pigmente und eine Minderzahl von organischen Pigmenten neutral verhalten. Es wird angenommen, dass Pigmente bei der Erstarrung der Polymerschmelze als Nukleierungszentren wirken und so zu einem zum Verzug neigenden Polymer führen.

Es sind bereits verschiedene Methoden vorgeschlagen worden, um dem Verzugsproblem entgegenzuwirken. Zu verzugsfreien Pigmenten gelangt man gemäß US-A-4 107 133 durch Behandlung von Kupferphthalocyaninen mit einem Silan- bzw. Titanatkuppler, gemäß US-A-4 233 206 durch organische Pigmente (insbesondere Kupferphthalocyanine), die mit Carbonsäuren veresterte Methylolgruppen enthalten, gemäß EP 0 466 646 durch mit polaren Polymeren beschichtete Pigmente, gemäß EP 0 498 667 durch Verwendung von mit Polyalkylenoxy-Gruppen substituierten Farbstoffen, gemäß EP 0 296 107 durch ethylcelluloseüberzogene Pigmente, gemäß DE 43 13 090 durch organische Pigmente, die einem Niedertemperaturplasma ausgesetzt wurden, gemäß DE 42 14 868 durch Sulfonsäure- und Alkalimetallsulfonatgruppen-modifizierte Pigmente und gemäß WO 01/77231 durch anchlorierte Kupferphthalocyanine mit einem Chlorgehalt von 10 bis 40 Gew.-% und einer Dispergierhärte ≤ 10.

In DE-A-102 04 275 wird beschrieben, dass Phthalocyanine durch Behandlung mit starken Basen, wie z.B. Natriummethylat, und Alkoholen in organischen Medien in verzugsfreie Phthalocyanine umgewandelt werden können.

Diese Methoden genügen jedoch nicht immer den heutigen Anforderungen der Technik und führen je nach verwendetem Pigment nicht zum gewünschten Resultat. Darüber hinaus sind die meisten dieser Methoden technisch aufwendig und erfordern mitunter auch die Synthese von Pigment-Derivaten.

Es wurde nun gefunden, dass Phthalocyanine, insbesondere Kupferphthalocyanine, durch Behandlung mit Dicarbonsäuren in organischen Medien in verzugsfreie Phthalocyanine hoher Farbstärke überführt werden können, die sich überraschend gut zum verzugsfreien Pigmentieren von teilkristallinen Kunststoffen eignen.

Gegenstand der vorliegenden Erfindung ist ein Verfahren zum verzugsfreien Pigmentieren von teilkristallinen Kunststoffen, dadurch gekennzeichnet, dass ein Phthalocyaninpigment verwendet wird, das als Suspension in einem vorzugsweise säuregruppenfreien, organischen Lösemittel in Gegenwart einer 2, 3 oder 4 Carboxylgruppen enthaltenden Carbonsäure oder einem entsprechenden Carbonsäuresalz auf eine Temperatur von mindestens 80°C erhitzt wurde.

Im Sinne der vorliegenden Erfindung bedeutet der Begriff "verzugsfrei" einen im Vergleich zum unbehandelten Pigment deutlich herabgesetzten Verzug.

Das erfindungsgemäße Verfahren wird vorzugsweise bei Phthalocyaninen mit Fe, Ni, Co oder Cu als Zentralatom oder bei metallfreien Phthalocyaninen, mit einem Halogengehalt von 0 bis 50 Gew.-% angewandt. Unter Halogen werden Chlor und/oder Brom verstanden, insbesondere Chlor. Besonders bevorzugt sind chlorhaltige Kupferphthalocyanine, insbesondere solche mit einem Chlorgehalt von 1 bis 50 Gew.-%, ganz besonders bevorzugt mit einem Chlorgehalt von 2 bis 10 Gew.-%, entsprechend etwa 0,5 bis 2 Chloratomen pro Molekül, beispielsweise bei C.I. Pigment Blue 15 (chlorfrei), 15:1, 15:2, 15:3, 15:4, 15:6, 16, 75 sowie C.I. Pigment Green 7 und 36.

Als organisches Lösemittel wird vorzugsweise ein säuregruppenfreies, insbesondere carbonsäure- und phenolfreies, polares organisches Lösemittel eingesetzt, bevorzugt aliphatische Säureamide, wie N,N-Dimethylformamid; cyclische Carbonsäureamide, wie N-Methylpyrrolidon, Alkohole mit 1 bis 20 C-Atomen, besonders bevorzugt $C_2$-$C_6$-Alkohole, Cyclohexanol, insbesondere n-, iso- oder tert.-Butanol; Glykole, Ether und Glykolether, wie Tetrahydrofuran, Ethylenglykol, Propylenglykol, Ethyldiglykol, Methoxypropanol, Methoxybutanol, Ethylenglykolmonoalkylether oder -dialkylether, wobei Alkyl für Methyl, Ethyl, Propyl und Butyl stehen kann; Polyethylenglykolmonomethylether, insbesondere solche mit einer mittleren molaren Masse von 350 bis 550 g/mol, und Polyethylenglykoldimethylether, insbesondere solche mit einer mittleren molaren Masse von 250 bis 500 g/mol; aromatische Kohlenwasserstoffe, wie Toluol, Xylole oder Ethylbenzol; aromatische Halogenkohlenwasserstoffe, wie Chlorbenzol, Dichlorbenzole oder Brombenzol; Nitrobenzol; Sulfone und Sulfoxide, wie Dimethylsulfoxid oder Sulfolan; sowie Mischungen davon.

In der Regel kommen 1 bis 30 g, bevorzugt 5 bis 15 g, organisches Lösemittel je g Phthalocyanin-Pigment zum Einsatz. Selbstverständlich können auch größere Mengen organisches Lösemittel verwendet werden, dies wäre jedoch unwirtschaftlich. Bei geringeren Mengen an organischem Lösemittel kann das Reaktionsgemisch schlecht rührbar sein.

Das in das erfindungsgemäße Verfahren eingesetzte Kupferphthalocyanin kann ein Rohpigment, ein gemahlenes Präpigment (durch Trockenmahlung aktiviert) oder ein gemahlenes und gefinishtes Pigment (Fertigpigment) sein.

Es wird vorteilhaft als getrocknete Ware mit einem Wassergehalt von max. 2 Gew.-% eingesetzt. Ein höherer Wassergehalt sollte vermieden werden, da die Verzugswerte der erfindungsgemäß hergestellten Pigmente sonst ansteigen. Das organische Lösemittel weist bevorzugt einen Wassergehalt von max. 1 Gew.-% auf, bevorzugt einen Wassergehalt von 0,03 bis 0,2 Gew.-%.

Als Carbonsäuren kommen bevorzugt aliphatische Di-, Tri- und Tetracarbonsäuren in Betracht.

Als Dicarbonsäuren kommen vorzugsweise gesättigte oder ungesättigte $C_2$-$C_{20}$-Dicarbonsäuren, insbesondere $C_2$-$C_4$-Dicarbonsäuren zum Einsatz, beispielsweise Oxalsäure, Malonsäure, Bernsteinsäure, Maleinsäure und Fumarsäure. Besonders bevorzugt sind jedoch die Alkali- oder Erdalkalisalze der besagten Dicarbonsäuren. Besonders bevorzugt sind di-Natriumoxalat und di-Kaliumoxalat. Als Tricarbonsäuren kommen insbesondere Citronensäure und Aconitsäure in Betracht. Als Tetracarbonsäure kommt insbesondere Butantetracarbonsäure in Betracht. Auch hier sind die Alkali- und Erdalkalisalze dieser Säuren bevorzugt. Zweckmäßigerweise werden 5 bis 300 Mol-% Carbonsäure(salz), bevorzugt 5 bis 100 Mol-%, bezogen auf das Pigment, eingesetzt. Auch die Carbonsäuren oder - salze sollten in möglichst wasserfreier Form (maximal 1 Gew.-% Wasser) eingesetzt werden.

In vielen Fällen ist es vorteilhaft, wenn die Suspension zusätzlich noch eine Base enthält. Als Basen kommen beispielsweise zum Einsatz:

Alkalimetallhydroxide, Erdalkalimetallhydroxide, Alkalimetallalkoholate und Erdalkalimetallalkoholate, wobei das Alkoholat 1 bis 20 C-Atome, vorzugsweise 2 bis 4 C-Atome, hat. Besonders bevorzugt sind Natriumhydroxid, Kaliumhydroxid, Natriumethylat und Kaliumethylat.

Bezogen auf das Pigment werden zweckmäßigerweise 0 bis 200 Mol-%, bevorzugt 1 bis 100 Mol-%, insbesondere 5 bis 80 Mol-%, Base eingesetzt. Der Einsatz größerer Mengen Base ist möglich, aber unwirtschaftlich.

Die erfindungsgemäße Behandlung des Phthalocyanins kann im offenen oder geschlossenen System bei mindestens 80°C, vorzugsweise bei 120 bis 220°C, insbesondere bei 160 bis 200°C durchgeführt werden, wobei im geschlossenen System meist unter dem sich einstellenden Druck gearbeitet wird. Falls gewünscht, kann in einem Autoklaven auch ein höherer Druck eingestellt werden. Im allgemeinen dauert die thermische Behandlung 1 bis 24 h, bevorzugt 1 bis 8 h.

Zur Isolierung des behandelten Pigmentes geht man zweckmäßigerweise wie folgt vor:

Man kühlt das Reaktionsgemisch ab, bevorzugt auf etwa 30 bis 90°C, rührt die Suspension in Wasser ein und isoliert das Pigment vorzugsweise im neutralen bis sauren pH-Bereich. Dazu kann die Suspension mit einer Säure, z.B. HCl, neutralisiert und das Pigment durch eine Filtration abgetrennt werden. Das Pigment wird gewaschen, getrocknet und gemahlen. Gegebenenfalls kann das Pigment nach dem Abkühlen auch direkt abfiltriert und anschließend mit reichlich Wasser nachgewaschen, getrocknet und gemahlen werden. Ein weiterer Finish ist nicht erforderlich.

Die erfindungsgemäß behandelten Phthalocyanine eignen sich hervorragend zum Einfärben von teilkristallinen Kunststoffen.

Unter teilkristallinen Kunststoffen werden solche verstanden, welche bei der Erstarrung kleine kristalline Kerne oder Aggregate bilden, manchmal auch nur in Gegenwart von Nukleierungsmitteln (zum Beispiel organischen Pigmenten). Teilkristalline Kunststoffe sind im allgemeinen thermoplastische hochmolekulare organische Materialien mit einem Molekulargewicht ($M_w$) von $10^4$ bis $10^8$, bevorzugt $10^5$ bis $10^7$, und einem Kristallinitätsgrad ($X_c$) von 10 bis 99,9%, bevorzugt von 40 bis 99%, besonders bevorzugt von 80 bis 99%. Bevorzugte teilkristalline Kunststoffe sind Homopolymere, Block- oder statistische Copolymere und Terpolymere von Ethylen, Propylen, Butylen, Styrol und/oder Divinylbenzol, insbesondere Polyolefine, wie Polyethylen (HDPE, MDPE, LDPE), Polypropylen, insbesondere Polyethylen hoher Dichte (HDPE), weiterhin auch Polystyrol, PVC, Polyester, wie Polyethylenterephthalat, und Polyamide, wie Nylon 6 und Nylon 66.

Die teilkristallinen Kunststoffe können noch Additive in üblichen Mengen enthalten, wie z.B. Stabilisatoren, optische Aufheller, Füllmittel und Gleitmittel.

Bei der Einfärbung der teilkristallinen Kunststoffe wird das erfindungsgemäß behandelte Phthalocyaninpigment zweckmäßigerweise in einer Menge von 0,01 bis 5 Gew.-%, vorzugsweise 0,05 bis 1 Gew.-%, bezogen auf den Kunststoff, eingesetzt. Die Einfärbung selbst kann nach üblichen Methoden, wie z.B. durch Extrusion, erfolgen.

Die Prüfung der Verzugsbeeinflussung von Polyolefin durch das erfindungsgemäß hergestellte Pigment erfolgt an einem Spritzgussfertigteil in Form einer Platte in Anlehnung an die Europäische Norm EN ISO 294-4:2003 (Spritzgießen von Probekörpern aus Thermoplasten, Teil 4: Bestimmung der Verarbeitungsschwindung). Nach der Alterung werden die Dimensionen der Platte (Länge, Breite) ausgemessen und der Verzug nach der folgenden Gleichung ermittelt:

$$\% \text{ Verzug} = 100 \times (\% \text{ Verzug vertikal} - \% \text{ Verzug horizontal})/(\% \text{ Verzug horizontal})$$

Die Verzugswerte werden dabei sowohl bei 220°C als auch bei 280°C bestimmt. Als in der Praxis verzugsfrei haben sich Pigmente erwiesen, bei denen der Verzug unter 10 % liegt. Pigmente, die einen Verzug von 10 bis 20 % aufweisen, werden als verzugsarm bezeichnet und sind zum verzugsfreien Einfärben von Kunststoffen bedingt, d.h. nach einer Vorprüfung, geeignet.

Die erfindungsgemäß behandelten Phthalocyaninpigmente können natürlich auch zum Pigmentieren von beliebigem hochmolekularem Material natürlicher oder synthetischer Herkunft verwendet werden, beispielsweise für Masterbatche, Druckfarben, Tinten, Inkjet-Tinten, Lacke, Pulverlacke, Anstrichfarben, elektrophotographische Toner und Farbfilter.

In den folgenden Beispielen bedeuten Prozentangaben Gewichtsprozente und die angegebenen Mol-%-Angaben beziehen sich auf das eingesetzte Pigment, sofern nicht anders angegeben.

Beispiel 1:

Ein Gemisch aus 15 g Kupferphthalocyanin-Rohpigment (P.B. 15:1, Chlorgehalt ca. 3 %) mit einem Wassergehalt ≤ 0,6 %, 250 ml N-Methylpyrrolidon, 1,26 g Oxalsäure (56 Mol-%) und 0,4 g Natriumhydroxid (40 Mol-%) werden 2 Stunden auf 180°C erhitzt. Nach dem Abkühlen der Suspension wird das Gemisch in Wasser eingerührt und anschließend mit Salzsäure neutralisiert. Die Reaktionsmischung wird abgesaugt, mit Wasser gewaschen und gemahlen.

Beispiel 2:

Der Versuch wird wie unter Beispiel 1 durchgeführt, jedoch mit 0,63 g Oxalsäure (28 Mol-%) und 0,6 g Natriumhydroxid (60 Mol-%).

Beispiel 3:

Ein Gemisch aus 15 g Kupferphthalocyanin-Rohpigment (P.B. 15:1, Chlorgehalt ca. 3 %) mit einem Wassergehalt ≤ 0,6 %, 250 ml N-Methylpyrrolidon, 2,01 g di-Natriumoxalat (60 Mol-%) werden in einem geschlossenen Gefäß 2 h auf 180°C erhitzt. Nach dem Abkühlen wird wie unter Beispiel 1 aufgearbeitet.

Beispiel 4:

Der Versuch wird wie unter Beispiel 3 durchgeführt, jedoch mit 2,01 g di-Natriumoxalat (60 Mol-%) und 0,4 g Natriumhydroxid (40 Mol-%).

Beispiel 5:

Der Versuch wird wie unter Beispiel 3 durchgeführt, jedoch mit 2,35 g di-Natriumoxalat (70 Mol-%) und 1,02 g Natriumethylat (60 Mol-%).

Beispiel 6:

Ein Gemisch aus 15 g Kupferphthalocyanin-Rohpigment (P.B. 15:1, Cl-Gehalt ca. 3 Gew.-%) mit einem Wassergehalt ≤ 0,6 %, 250 ml Methyltriglykol, 2,01 g di-Natriumoxalat (60 Mol-%) und 0,4 g Natriumhydroxid (40 Mol-%) werden in einem geschlossenen Gefäß 2 h auf 160°C erhitzt. Nach dem Abkühlen wird wie unter Beispiel 1 aufgearbeitet.

Beispiel 7:

Ein Gemisch aus 15 g Kupferphthalocyanin-Fertigpigment (PV-Echtgrün GG; P.G. 7, Cl-Gehalt 49 Gew.-%) mit einem Wassergehalt ≤ 0,6 %, 250 ml N-Methylpyrrolidon, 2,01 g di-Natriumoxalat und 0,4 g Natriumhydroxid werden 2 h auf 180°C erhitzt. Nach dem Abkühlen wird wie unter Beispiel 1 aufgearbeitet.

Beispiel 8:

Ein Gemisch aus 15 g Kupferphthalocyanin-Rohpigment (P.B. 15:1, Chlorgehalt ca. 3 %) mit einem Wassergehalt ≤ 0,6 %, 250 ml N-Methylpyrrolidon, 1,34 g Zitronensäure (27 Mol-%) und 0,6 g Natriumhydroxid (60 Mol-%) werden in einem geschlossenen Gefäß 2 h auf 180°C erhitzt. Nach dem Abkühlen wird wie unter Beispiel 1 aufgearbeitet.

Beispiel 9:

Ein Gemisch aus 15 g Kupferphthalocyanin-Rohpigment (P.B. 15:1, Chlorgehalt ca. 3 %) mit einem Wassergehalt ≤ 0,6 %, 250 ml N-Methylpyrrolidon, 1,16 g Phthalsäure (27 Mol-%) und 0,6 g Natriumhydroxid (60 Mol-%) werden in einem geschlossenen Gefäß 2 h auf 180°C erhitzt. Nach dem Abkühlen wird wie unter Beispiel 1 aufgearbeitet.

Mit den Pigmenten aus den Beispielen 1 bis 9 werden Polyethylen-Platten (600 g ®Novolen und 0,6 g Pigment) pigmentiert und der Verzug bestimmt.

Methode: Schwindungs-Prüfung organischer Pigmente in Polyethylen im Spritzguss. Als Formplatte dient eine rechteckige Platte mit Filmanguss und den Maßen 60 mal 60 mm. Die Auswertung erfolgt durch Vermessen längs und quer zur Spritzrichtung. Es werden jeweils 10 Spritzlinge hergestellt und vermessen, wobei der jeweilige Durchschnittswert Anwendung findet. Als Nullprobe werden 10 Spritzlinge aus nichtpigmentiertem Kunststoff verwendet. Dabei erfährt dieses Material die gleiche Aufbereitung wie das pigmentierte System.

| Beispiel | Verzug 220°C [%] | Verzug 280°C [%] |
|---|---|---|
| unbehandeltes P.B. 15:1 | 82 | 87 |
| 1 | 47 | 46 |
| 2 | 9 | 9 |
| 3 | 12 | 10 |
| 4 | 9 | 8 |
| 5 | 4 | 15 |
| 6 | 20 | 24 |
| unbehandeltes P.G. 7 | 63 | 19 |
| 7 | 24 | 5 |
| 8 | 9 | 11 |
| 9 | 6 | 2 |

Die erfindungsgemäß pigmentierten Polyethylen-Platten weisen hohe Farbstärken und einen deutlich niedrigeren Verzugswert als unbehandeltes P.B. 15:1 bzw. P.G.7 auf.

**Patentansprüche**

1. Verfahren zum verzugsfreien Pigmentieren von teilkristallinen Kunststoffen, **dadurch gekennzeichnet, dass** ein Phthalocyaninpigment verwendet wird, das als Suspension in einem organischen Lösemittel in Gegenwart einer 2, 3 oder 4 Carboxylgruppen enthaltenden Carbonsäure oder einem entsprechenden Carbonsäuresalz auf eine Temperatur von mindestens 80°C erhitzt wurde.

2. Verfahren nach Anspruch 1, **dadurch gekennzeichnet, dass** das Phthalocyaninpigment ein Kupferphthalocyaninpigment, insbesondere ein chloriertes Kupferphthalocyaninpigment, ist.

3. Verfahren nach Anspruch 1 oder 2, **dadurch gekennzeichnet, dass** das organische Lösemittel aus der Gruppe der aliphatischen Säureamide, cyclischen Carbonsäureamide, Alkohole mit 1 bis 20 C-Atomen, Glykole, Ether, Glykolether, aromatischen Kohlenwasserstoffe, aromatischen Halogenkohlenwasserstoffe, Nitrobenzol, Sulfoxide, Sulfone sowie Mischungen davon, ausgewählt ist.

4. Verfahren nach mindestens einem der Ansprüche 1 bis 3, **dadurch gekennzeichnet, dass** das organische Medium einen Wassergehalt von maximal 1 Gew.-% aufweist.

**5.** Verfahren nach mindestens einem der Ansprüche 1 bis 4, **dadurch gekennzeichnet, dass** als Carbonsäure eine gesättigte oder ungesättigte Dicarbonsäure mit 2 bis 20 C-Atomen eingesetzt wird.

**6.** Verfahren nach mindestens einem der Ansprüche 1 bis 5, **dadurch gekennzeichnet, dass** als Carbonsäure Oxalsäure, Malonsäure, Bernsteinsäure. Maleinsäure, Fumarsäure und/oder Citronensäure eingesetzt wird.

**7.** Verfahren nach mindestens einem der Ansprüche 1 bis 6, **dadurch gekennzeichnet, dass** die Carbonsäure als Alkali- oder Erdalkalisalz eingesetzt wird.

**8.** Verfahren nach mindestens einem der Ansprüche 1 bis 7, **dadurch gekennzeichnet, dass** die Carbonsäure oder das Carbonsäuresalz in einer Menge von 5 bis 300 Mol-%, bezogen auf Pigment, eingesetzt wird.

**9.** Verfahren nach mindestens einem der Ansprüche 1 bis 8, **dadurch gekennzeichnet, dass** die Suspension zusätzlich eine Base, vorzugsweise ein Alkalimetallhydroxid, Erdalkalimetallhydroxid, Alkalimetallalkoholat oder Erdalkalimetallalkoholat, wobei das Alkoholat 1 bis 20 C-Atome hat, enthält.

**10.** Verfahren nach mindestens einem der Ansprüche 1 bis 9, **dadurch gekennzeichnet, dass** auf eine Temperatur von 120 bis 220°C erhitzt wird.

**11.** Verfahren nach mindestens einem der Ansprüche 1 bis 10, **dadurch gekennzeichnet, dass** 1 bis 24 Stunden erhitzt wird.

**12.** Verfahren nach mindestens einem der Ansprüche 1 bis 11, **dadurch gekennzeichnet, dass** der teilkristalline Kunststoff ein Polyolefin, vorzugsweise Polyethylen oder Polypropylen, ist.

## Claims

**1.** A process for warpage-free pigmentation of partly crystalline plastics, **characterized in that** it utilizes a phthalocyanine pigment which was heated to not less than 80°C as a suspension in an organic solvent in the presence of a carboxylic acid containing 2, 3 or 4 carboxyl groups or a salt of such a carboxylic acid.

**2.** A process according to claim 1, **characterized in that** the phthalocyanine pigment is a copper phthalocyanine pigment, in particular a chlorinated copper phthalocyanine pigment.

**3.** A process according to claim 1 or 2, **characterized in that** the organic solvent is selected from the group of the aliphatic acid amides, cyclic carboxamides, alcohols having 1 to 20 carbon atoms, glycols, ethers, glycol ethers, aromatic hydrocarbons, aromatic halohydrocarbons, nitrobenzene, sulfoxides, sulfones and also mixtures thereof.

**4.** A process according to at least one of claims 1 to 3, **characterized in that** the organic medium has a water content of not more than 1% by weight.

**5.** A process according to at least one of claims 1 to 4, **characterized in that** the carboxylic acid used is a saturated or unsaturated dicarboxylic acid having 2 to 20 carbon atoms.

**6.** A process according to at least one of claims 1 to 5, **characterized in that** the carboxylic acid used is oxalic acid, malonic acid, succinic acid, maleic acid, fumaric acid and/or citric acid.

**7.** A process according to at least one of claims 1 to 6, **characterized in that** the carboxylic acid is used in the form of an alkali metal salt or in the form of an alkaline earth metal salt.

**8.** A process according to at least one of claims 1 to 7, **characterized in that** the carboxylic acid or the carboxylic acid salt is used in an amount of 5 to 300 mol%, based on pigment.

**9.** A process according to at least one of claims 1 to 8, **characterized in that** the suspension further comprises a base, preferably an alkali metal hydroxide, alkaline earth metal hydroxide, alkali metal alkoxide or alkaline earth metal alkoxide, the alkoxide having 1 to 20 carbon atoms.

10. A process according to at least one of claims 1 to 9, **characterized in that** the phthalocyanine pigment is heated to a temperature of 120 to 220°C.

11. A process according to at least one of claims 1 to 10, **characterized in that** the phthalocyanine pigment is heated for 1 to 24 hours.

12. A process according to at least one of claims 1 to 11, **characterized in that** the partly crystalline plastic is a polyolefin, preferably polyethylene or polypropylene.

**Revendications**

1. Procédé de pigmentation sans déformation de matières plastiques semi-cristallines, **caractérisé en ce que** l'on utilise un pigment phtalocyanine, que l'on a chauffé à une température d'au moins 80°C sous forme de suspension dans un solvant organique en présence d'un acide carboxylique contenant 2, 3 ou 4 groupes carboxyle ou d'un sel d'acide carboxylique correspondant.

2. Procédé selon la revendication 1, **caractérisé en ce que** le pigment phtalocyanine est un pigment phtalocyanine de cuivre, en particulier un pigment phtalocyanine de cuivre chloré.

3. Procédé selon la revendication 1 ou 2, **caractérisé en ce que** le solvant organique est choisi dans le groupe des amides d'acides aliphatiques, des amides d'acides carboxyliques cycliques, des alcools contenant 1 à 20 atomes de carbone, des glycols, des éthers, des éthers glycoliques, des hydrocarbures aromatiques, des hydrocarbures halogénés aromatiques, du nitrobenzène, des sulfoxydes, des sulfones ainsi que des mélanges de ceux-ci.

4. Procédé selon au moins l'une quelconque des revendications 1 à 3, **caractérisé en ce que** le milieu organique présente une teneur en eau d'au maximum 1% en poids.

5. Procédé selon au moins l'une quelconque des revendications 1 à 4, **caractérisé en ce que** l'on met en oeuvre, en tant qu'acide carboxylique, un acide dicarboxylique saturé ou insaturé contenant 2 à 20 atomes de carbone.

6. Procédé selon au moins l'une quelconque des revendications 1 à 5, **caractérisé en ce que** l'on met en oeuvre, en tant qu'acide carboxylique, l'acide oxalique, l'acide malonique, l'acide succinique, l'acide maléique, l'acide fumarique et/ou l'acide citrique.

7. Procédé selon au moins l'une quelconque des revendications 1 à 6, **caractérisé en ce que** l'on met en oeuvre l'acide carboxylique sous forme de sel alcalin ou alcalino-terreux.

8. Procédé selon au moins l'une quelconque des revendications 1 à 7, **caractérisé en ce que** l'on met en oeuvre l'acide carboxylique ou le sel d'acide carboxylique à raison de 5% à 300% en moles par rapport au pigment.

9. Procédé selon au moins l'une quelconque des revendications 1 à 8, **caractérisé en ce que** la suspension contient en plus une base, de préférence un hydroxyde de métal alcalin, un hydroxyde de métal alcalino-terreux, un alcoolate de métal alcalin ou un alcoolate de métal alcalino-terreux, l'alcoolate contenant 1 à 20 atomes de carbone.

10. Procédé selon au moins l'une quelconque des revendications 1 à 9, **caractérisé en ce que** l'on chauffe à une température de 120°C à 220°C.

11. Procédé selon au moins l'une quelconque des revendications 1 à 10, **caractérisé en ce que** l'on chauffe pendant 1 à 24 heures.

12. Procédé selon au moins l'une quelconque des revendications 1 à 11, **caractérisé en ce que** la matière plastique semi-cristalline est une polyoléfine, de préférence le polyéthylène ou le polypropylène.